# EUROPÄISCHE PATENTANMELDUNG

(11) **EP 4 600 813 A2**
(43) Veröffentlichungstag der Anmeldung: **13.08.2025**
(21) Anmeldenummer: 25184888.3
(22) Anmeldetag: 24.06.2025
(51) Int. Cl.: G06F 8/65

(54) **VAKUUMSYSTEM UND VERFAHREN ZUM BETREIBEN EINES VAKUUMSYSTEMS**

(71) Anmelder: Pfeiffer Vacuum Technology AG, 35614 Asslar (DE)
(72) Erfinder: BÖTTCHER, Jochen, 35394 Gießen-Rödgen (DE)
(74) Vertreter: Manitz Finsterwald Patent- und Rechtsanwaltspartnerschaft mbB

(57) **Zusammenfassung**

Die Erfindung betrifft ein Vakuumsystem mit mehreren Komponenten, die jeweils eine Teilfunktion von mehreren unterschiedlichen Teilfunktionen des Vakuumsystems ausführen und die hierzu jeweils zumindest ein Softwaremodul aufweisen, das eine Komponenten-Software umfasst, die während des Betriebs des Vakuumsystems von der Komponente verarbeitet wird, um die Teilfunktion dieser Komponente auszuführen, wobei das Vakuumsystem eine Steuereinrichtung umfasst, die dazu ausgebildet ist, während des Betriebs des Vakuumsystems die Softwaremodule komponentenweise dadurch zu aktualisieren, dass an zumindest einer Komponente deren Komponenten-Software aktualisiert wird und währenddessen diese Komponente ihre Teilfunktion nicht ausführt, und dass während der Aktualisierung der Komponenten-Software der zumindest einen Komponente die oder jede andere Komponente ihre Teilfunktion weiterhin ausführt, so dass während der Aktualisierung der Komponenten-Software einer jeweiligen Komponente das Vakuumsystem ohne die Teilfunktion dieser Komponente weiterhin betrieben wird.

## Beschreibung

Die Erfindung betrifft ein Vakuumsystem mit mehreren Komponenten, die jeweils eine Teilfunktion von mehreren unterschiedlichen Teilfunktionen des Vakuumsystems ausführen und die hierzu jeweils zumindest ein Softwaremodul aufweisen, das eine Komponenten-Software umfasst, die während des Betriebs des Vakuumsystems von der Komponente verarbeitet wird, um die Teilfunktion dieser Komponente auszuführen.

Die Erfindung betrifft außerdem ein Verfahren zum Betreiben eines derartigen Vakuumsystems.

In der Vakuumtechnik verfügen viele Vakuumeinrichtungen, beispielsweise Vakuumpumpen, Vakuummessgeräte oder Vakuumventile, über Software, die zu gegebener Zeit aus unterschiedlichen Gründen einer Aktualisierung, im Folgenden auch als "Update" bezeichnet, unterzogen werden muss.

Hierzu ist es bislang notwendig, die Vakuumeinrichtung in einen Zustand zu versetzen, in welchem sie ihre bestimmungsgemäße Funktion vorübergehend nicht ausführen kann. Insbesondere wird die Vakuumeinrichtung ausgeschaltet, um ein Update vornehmen zu können. Aus Anwendersicht ist dies von Nachteil, da die jeweilige Vakuumanwendung, in der die zu aktualisierende Vakuumeinrichtung gerade eingesetzt wird, während der Aktualisierung der Vakuumeinrichtung nicht weiterbetrieben werden kann.

Um dieses Problem zu vermeiden bzw. die daraus resultierenden Nachteile abzumildern, hat man sich mit der Schaffung von Redundanzen beholfen. So wurden beispielsweise in einer Vakuumanwendung, für deren bestimmungsgemäßen Betrieb eine einzige Vakuumpumpe genügt, zwei oder mehr Vakuumpumpen gleichen Typs vorgehalten, so dass für den Fall eines Software-Updates einer der Vakuumpumpe vorübergehend die andere Vakuumpumpe "einspringen" kann, um einen unterbrechungsfreien Betrieb der Vakuumanwendung zu gewährleisten. Derartige Redundanzen sind jedoch teuer und bedeuten einen beträchtlichen apparativen Mehraufwand und erhöhten Platzbedarf.

Die gleiche Problematik stellt sich auch in anderen Konstellationen, hier auch als "Skalierungen" bezeichnet. Viele Vakuumgeräte verfügen über mehrere Einheiten, die jeweils eine Teilfunktion des Vakuumgeräts übernehmen. Bei diesen Teilfunktionen kann es sich beispielsweise um eine Prozesssteuerung, eine Antriebssteuerung, eine Kommunikation und eine Datenhandhabung handeln. Die Einheiten, die derartige Teilfunktionen übernehmen, sind insbesondere Mikrocontroller, die in dem jeweiligen Vakuumgerät verbaut sind. So kann eine Vakuumpumpe beispielsweise einen Mikrocontroller für die Steuerung des Antriebsmotors, der eine Rotorwelle der Vakuumpumpe in Rotation versetzt, sowie einen weiteren Mikrocontroller für die Kommunikation der Vakuumpumpe z.B. mit einer Prozesssteuerung umfassen, welche den Betrieb eines die Vakuumpumpe umfassenden Pumpstands steuert und überwacht. Die Mikrocontroller umfassen jeweils ein Softwaremodul, auf dem sich die Software befindet, die während des Betriebs von dem Mikrocontroller verarbeitet wird, um dessen Teilfunktion auszuführen.

Um beispielsweise die Software für die Antriebssteuerung zu aktualisieren, wird bislang die Vakuumpumpe abgeschaltet. Abhilfe könnte wiederum durch Redundanzen geschaffen werden, indem beispielsweise die Vakuumpumpe mit einer weiteren Antriebssteuerung versehen wird, von denen eine die Steuerung des Antriebsmotors übernimmt, wenn für die andere ein Softwareupdate ansteht. Sobald das Softwareupdate abgeschlossen ist, übernimmt die aktualisierte Antriebssteuerung wieder die Steuerung des Antriebsmotors.

In dieser Skalierung bildet dann die Vakuumpumpe, oder ein anderes Vakuumgerät wie z.B. ein Messgerät oder ein Ventil, das Vakuumsystem und die Mikrocontroller bilden die Komponenten mit den unterschiedlichen Teilfunktionen.

Aufgabe der Erfindung ist es, für ein Vakuumsystem der eingangs genannten Art eine Möglichkeit zu einer Softwareaktualisierung zu schaffen, ohne dass hierfür Redundanzen vorgesehen werden müssen und ohne dass der Betrieb des Vakuumsystems in nachteiliger Weise beeinträchtigt oder vollständig unterbrochen werden muss.

Die Lösung dieser Aufgabe erfolgt jeweils durch die Merkmale der unabhängigen Ansprüche.

Bei dem erfindungsgemäßen Vakuumsystem ist vorgesehen, dass das Vakuumsystem eine Steuereinrichtung umfasst, die dazu ausgebildet ist, während des Betriebs des Vakuumsystems die Softwaremodule komponentenweise dadurch zu aktualisieren, dass an zumindest einer Komponente deren Komponenten-Software aktualisiert wird und währenddessen diese Komponente ihre Teilfunktion nicht ausführt, und dass während der Aktualisierung der Komponenten-Software der zumindest einen Komponente die oder jede andere Komponente ihre Teilfunktion weiterhin ausführt, so dass während der Aktualisierung der Komponenten-Software einer jeweiligen Komponente das Vakuumsystem ohne die Teilfunktion dieser Komponente weiterhin betrieben wird.

Die Komponenten des Vakuumsystems sind dazu vorgesehen, unterschiedliche Teilfunktionen des Vakuumsystems auszuführen. Hierunter ist zu verstehen, dass zwischen den Komponenten keine Redundanz vorliegt. Für einen bestimmungsgemäßen Betrieb des Vakuumsystems werden folglich alle Teilfunktionen und somit alle Komponenten benötigt. Für einen bestimmungsgemäßen Betrieb des Vakuumsystems kann dieses also nicht wahlweise entweder mit der einen Komponente oder mit der anderen Komponente betrieben werden.

Bei dem Konzept der Erfindung wird folglich eine vorübergehende Nichtfunktion einer oder mehrerer Komponenten, aber eben nicht aller Komponenten, in Kauf genommen, d.h. es wird ein vorübergehender nicht-bestimmungsgemäßer Betrieb des Vakuumsystems in Kauf genommen. Die Erfindung beruht also auf der Erkenntnis, dass ein Betrieb des Vakuumsystems auch dann ohne nachteilige Beeinträchtigung möglich ist, wenn eine oder mehrere Komponenten ihre jeweilige Teilfunktion vorübergehend nicht ausführen.

Rein beispielhaft wurde erkannt, dass in einer Skalierung "Vakuumsystem = Vakuumgerät" das rotierende System einer Vakuumpumpe vorübergehend ohne Antriebssteuerung aufgrund seiner Trägheit einfach weiterrotieren kann - unter Beibehaltung der weiteren Teilfunktionen wie z.B. Kommunikation und Datenhandhabung, ohne die Performance der Vakuumpumpe während dieser Zeitspanne nachteilig zu beeinträchtigen.

Im Zusammenhang mit einer Skalierung "Vakuumsystem = Pumpanlage" wurde beispielsweise erkannt, dass eine von mehreren Vakuumpumpen, die nicht redundant vorgesehen sind, sondern die bestimmungsgemäß gemeinsam dazu dienen, in einem Rezipienten über einen vergleichsweise langen Zeitraum einen bestimmten Vakuumzustand aufrechtzuerhalten, vorübergehend abgeschaltet werden kann, ohne dass die gesamte Pumpanlage zeitweise außer Betrieb gehen muss. Insbesondere dann, wenn die Zeit für ein Softwareupdate klein ist gegenüber dem je nach Anwendung möglicherweise Stunden, Tage oder Wochen dauernden Zeitraum, über welchem in dem Rezipienten ein Vakuum aufrechterhalten werden soll, verschlechtert sich der Vakuumzustand im Rezipienten während eines Updates der einen Vakuumpumpe nicht in nachteiliger Weise.

Auf konkrete Beispiele wird auch an anderer Stelle näher eingegangen.

Folglich braucht durch das erfindungsgemäße Konzept der Betrieb des Vakuumsystems nicht wegen einer Software-Aktualisierung an einer der Komponenten unterbrochen zu werden, da das Vakuumsystem vorübergehend ohne die Teilfunktion der jeweils momentan aktualisierten Komponente ohne nachteilige Beeinträchtigungen weiterbetrieben werden kann.

Unter einer komponentenweisen Aktualisierung der Softwaremodule ist folglich zu verstehen, dass jeweils nur eine Komponente oder gegebenenfalls mehrere Komponenten, jedenfalls aber nicht alle Komponenten auf einmal, einem Softwareupdate unterzogen werden. Sofern eine Softwareaktualisierung für alle Komponenten erforderlich ist, können die Komponenten entweder mehr oder weniger unmittelbar nacheinander aktualisiert werden, oder es kann eine Komponente aktualisiert und zu einem grundsätzlich beliebigen späteren Zeitpunkt die oder jede weitere Komponente aktualisiert werden.

Eine für ein Update einer jeweiligen Komponente benötigte neue Komponenten-Software wird dem Vakuumsystem insbesondere von außen zugeführt. Dies bedeutet, dass das Vakuumsystem dazu ausgebildet ist, dass eine jeweilige Komponenten-Software mittels eines Datenträgers oder über eine drahtlose Verbindung empfangen und an die jeweilige Komponente bzw. deren Softwaremodul übertragen werden kann. Erfolgt die Aktualisierung mittels eines Datenträgers, ist das Vakuumsystem hierzu beispielsweise mit einer entsprechenden Übertragungs- und/oder Leseeinrichtung versehen, die z.B. einen Steckanschluss beispielsweise an einer Gehäuseaußenseite umfasst, um einen Datenträger oder ein mit einem Datenträger verbundenes Datenkabel an das Vakuumsystem anschließen zu können.

Es kann - zusätzlich oder alternativ - für die Übertragung von Software eine drahtgebundene Verbindung mit einem Steuerungs- oder Computersystem vorgesehen sein. Zu diesem Zweck können serielle Schnittstellen (z.B. auf Basis RS485 oder CAN), Feldbusse (z.B. Profibus, Modbus), Industrial Ethernet (z.B. EtherCAT, Profinet) oder andere Schnittstellen herkömmlicher Bauart vorgesehen sein. Bei der Datenübertragung können TCP/IP-basierende Protokolle sowie andere herkömmliche Protokolle und Standards der Informationstechnologie (z.B. FTP) zum Einsatz gelangen.

Mögliche Weiterbildungen der Erfindung sind auch in den abhängigen Ansprüchen, der nachfolgenden Beschreibung sowie der Zeichnung angegeben.

Gemäß einigen Weiterbildungen kann vorgesehen sein, dass die Steuereinrichtung der Vakuumsystems dazu ausgebildet ist, die Softwaremodule von zumindest zwei Komponenten nacheinander zu aktualisieren.

Das Vakuumsystem kann also auch dann weiterbetrieben werden, wenn die Softwaremodule mehrerer Komponenten zu aktualisieren sind und die Aktualisierung dieser Komponenten nacheinander erfolgt. Während beispielsweise eine erste Komponente aktualisiert wird, erfolgt der Weiterbetrieb des Vakuumsystems ohne die Teilfunktion dieser Komponente, sondern mit der Teilfunktion oder den Teilfunktionen der weiteren Komponente(n). Sobald die Aktualisierung der ersten Komponente abgeschlossen ist, steht deren Teilfunktion wieder zur Verfügung. Es erfolgt dann die Aktualisierung einer zweiten Komponente, wobei der Weiterbetrieb des Vakuumsystems dann ohne die Teilfunktion dieser zweiten Komponente erfolgt. Dieser Aktualisierungsprozess kann Komponente für Komponente fortgesetzt werden, bis alle erforderlichen Komponenten-Aktualisierungen durchgeführt worden sind und somit alle von dem Aktualisierungsprozess betroffenen Softwaremodule wieder auf dem aktuellen Stand sind.

Die Updates der einzelnen Softwaremodule können unmittelbar nacheinander erfolgen, d.h. zwischen den einzelnen Updates - die selbst typischerweise jeweils einige Sekunden bis wenige Minuten dauern können - vergehen jeweils nur Zeitspannen von einigen Sekunden oder allenfalls wenigen Minuten. Dies ist jedoch nicht zwingend. Der Zeitraum zwischen jeweils zwei aufeinander folgenden Softwareaktualisierungen kann auch größer sein.

Gemäß weiteren Ausführungsbeispielen kann vorgesehen sein, dass die Steuereinrichtung dazu ausgebildet ist, das Softwaremodul einer jeweiligen Komponente über eine andere Komponente zu aktualisieren.

Dies bedeutet, dass die Komponenten-Software der jeweiligen Komponente nicht direkt von außen, beispielsweise über einen einzusteckenden Datenträger oder über einen drahtgebundenen (z.B. wie vorstehend angegeben) oder drahtlosen Übertragungsweg, zugeführt wird, sondern dass die neue Komponenten-Software einer anderen Komponente zugeführt wird und von dieser anderen Komponente dann an die jeweils zu aktualisierenden Komponente übertragen wird.

Dieses Konzept ist beispielsweise dann von Vorteil, wenn die jeweils zu aktualisierende Komponente keinen eigenen Zugang von außen besitzt, beispielsweise keine Steckverbindung für einen einzusteckenden Datenträger, oder wenn es aus anderen Gründen vorteilhaft ist, neue Komponenten-Software für eine oder mehrere zu aktualisierende Komponenten ausschließlich einer Komponente zuzuführen, die entweder auch selbst eine Aktualisierung benötigt oder für die zumindest vorerst selbst keine Aktualisierung erforderlich ist.

Die neue Komponenten-Software für die jeweils zu aktualisierende Komponente kann an der anderen Komponente, der die Software unmittelbar von außen zugeführt wird, für einen grundsätzlich beliebig langen Zeitraum zwischengespeichert werden. Dieser Zeitraum kann vergleichsweise lang sein, so dass in Abhängigkeit von dem Betrieb des Vakuumsystems ein günstiger späterer Zeitraum für die Aktualisierung der jeweiligen Komponente abgewartet werden kann. Bis zu diesem Zeitpunkt verbleibt die Komponenten-Software dieser zu aktualisierenden Komponente an der anderen Komponente.

Alternativ kann auch ohne eine Zwischenspeicherung an der anderen Komponente diese lediglich als Übertragungsweg für die neue Komponenten-Software genutzt und somit die neue Komponenten-Software von außen der anderen Komponente zugeführt und dann unmittelbar an die jeweils zu aktualisierende Komponente übertragen werden.

Dementsprechend kann gemäß dem vorstehend erwähnten Konzept bei einigen Ausführungsbeispielen der Erfindung vorgesehen sein, dass die Steuereinrichtung dazu ausgebildet ist, das Softwaremodul einer jeweilige Komponente dadurch zu aktualisieren, dass die neue Komponenten-Software dieser jeweiligen Komponente zunächst bei der vorherigen Aktualisierung einer andere Komponente zusammen mit der neuen Komponenten-Software dieser anderen Komponente an diese andere Komponente übertragen und dort zwischengespeichert wird, und dass zu einem späteren Zeitpunkt die zwischengespeicherte neue Komponenten-Software an das Softwaremodul der jeweiligen Komponente übertragen wird, um das Softwaremodul dieser jeweiligen Komponente zu aktualisieren.

Eine solche Verknüpfung mit einer vorherigen Aktualisierung der anderen Komponente ist aber nicht zwingend. Der Weg zu der jeweils zu aktualisierenden Komponente über die andere Komponente - ob mit oder ohne dortige Zwischenspeicherung - kann auch genutzt werden, ohne dass eine Aktualisierung der anderen Komponente erfolgt, also ohne dass auch neue Komponenten-Software für die andere Komponente eingespielt wird.

Dementsprechend kann gemäß einigen Ausführungsbeispielen vorgesehen sein, dass die Steuereinrichtung dazu ausgebildet ist, das Softwaremodul einer jeweiligen Komponente dadurch zu aktualisieren, dass die neue Komponenten-Software dieser jeweiligen Komponente an eine andere Komponente, insbesondere an das Softwaremodul dieser anderen Komponente, übertragen wird und von dort an das Softwaremodul der jeweiligen Komponente übertragen wird, um das Softwaremodul dieser jeweiligen Komponente zu aktualisieren.

Hierbei ist es zwar möglich, aber nicht zwingend, dass auch die andere Komponente, über welche die Komponenten-Software der jeweils zu aktualisierenden Komponente zugeführt wird, einem Softwareupdate unterworfen wird, und es ist auch zwar möglich, aber nicht zwingend, dass eine Zwischenspeicherung der neuen Komponenten-Software an der anderen Komponente erfolgt.

Gemäß weiteren Ausführungsbeispielen kann der Weg über eine der Komponenten genutzt werden, um eine Mehrzahl von Komponenten zu aktualisieren, wahlweise mit oder ohne Aktualisierung derjenigen Komponente, über welche die Zufuhr neuer Komponenten-Software erfolgt. So kann beispielsweise neue Komponenten-Software für mehrere Komponenten nur einer dieser Komponenten zugeführt und intern entweder parallel an die jeweils anderen zu aktualisierenden Komponenten oder der Reihe nach zunächst an eine weitere der zu aktualisierenden Komponenten und ausgehend von dieser dann wiederum an eine der nächsten zu aktualisierenden Komponente, und so weiter, übertragen werden.

Des Weiteren kann gemäß einigen Ausführungsbeispielen vorgesehen sein, dass die Steuereinrichtung dazu ausgebildet ist, vor, während oder nach der Aktualisierung einer jeweiligen Komponenten-Software die vor der Aktualisierung von der Komponente verarbeitete alte Komponenten-Software zu löschen oder zu speichern. Insbesondere erfolgt eine solche Speicherung in dem Softwaremodul der jeweiligen Komponente. Die Komponente kann hierfür aber auch ein weiteres Softwaremodul aufweisen. Die gespeicherte alte Komponenten-Software kann als Sicherung, als Alternative oder als Rückfalllösung dienen, d.h. die alte Komponenten-Software steht für bestimmte Situationen zur Verfügung, in denen ein Rückgriff auf die alte Komponenten-Software vorteilhaft sein kann.

Wie an anderer Stelle bereits erwähnt, ist das Konzept der Erfindung für unterschiedliche Skalierungen anwendbar. Bei dem Vakuumsystem kann es sich zum Beispiel um eine vergleichsweise komplexe Vakuumanwendung, wie beispielsweise eine Beschichtungsanlage, handeln. Eine Komponente dieser Beschichtungsanlage kann dann beispielsweise von einer Beschichtungskammer gebildet sein. Eine oder mehrere weitere Einrichtungen der Beschichtungsanlagen bilden dann jeweils eine weitere Komponente. Eine weitere Komponente der Beschichtungsanlage, die zusätzlich zu der Beschichtungskammer vorgesehen ist, kann beispielsweise ein Pumpstand sein. Die das Vakuumsystem bildende Beschichtungsanlage umfasst dann als Komponenten zumindest eine Beschichtungskammer und zumindest einen Pumpstand. Diese Komponenten sind dann jeweils mit einem Softwaremodul versehen.

Weiter kann jede Komponente mehrere Unterkomponenten umfassen, die jeweils ein Softwaremodul aufweisen. So kann beispielsweise die Beschichtungskammer der Beschichtungsanlage mehrere Vakuumgeräte umfassen, beispielsweise eine Vakuumpumpe, ein Vakuumventil und ein Vakuummessgerät, die jeweils zumindest ein Softwaremodul aufweisen, auf der die betreffende Komponenten-Software verarbeitet wird, um die Teilfunktion auszuführen, also die Pumpfunktion, die Ventilfunktion bzw. die Messfunktion.

Ein Vakuumsystem kann folglich in diesem Sinne zwei Ebenen aufweisen, nämlich zum einen das Vakuumsystem und zum anderen die Komponenten mit deren unterschiedlichen Teilfunktionen. Es können aber auch eine oder mehrere Ebenen hinzukommen. Jede Komponente kann Unterkomponenten aufweisen, die unterschiedliche Teilfunktionen der Komponente ausführen und hierzu jeweilige Komponenten-Software umfassen, die gegebenenfalls einer Aktualisierung unterzogen werden muss.

Gemäß einer anderen Skalierung handelt es sich bei dem Vakuumsystem um eine vergleichsweise einfache Vakuumanwendung, beispielsweise einen Pumpstand. Die Komponenten diese Pumpstands können dann zum Beispiel von einer oder mehreren Vakuumpumpen, einem oder mehreren Vakuumventilen und einem oder mehreren Vakuummessgeräten gebildet werden. Jeweils zwei Vakuumgeräte können von einem unterschiedlichen Typ oder auch von einem gleichen Typ sein. Wenn zwei oder mehr Vakuumgeräte von einem gleichen Typ vorhanden sind, dann können diese Vakuumgeräte gleichwohl unterschiedliche Teilfunktionen innerhalb des Vakuumsystems ausführen. Es liegt dann insofern keine Redundanz vor.

Gemäß einer weiteren Skalierung kann das Vakuumsystem auch lediglich ein Vakuumgerät sein. Bei dem Vakuumgerät kann es sich beispielsweise um eine Vakuumpumpe, ein Vakuumventil oder ein Vakuummessgerät handeln. Während also in der vorstehend erläuterten Skalierung ein jeweiliges Vakuumgerät eine Komponente in einer das Vakuumsystem bildenden Vakuumanwendung, beispielsweise in einem Pumpstand, darstellt, ist bei dieser Skalierung das Vakuumgerät selbst das Vakuumsystem, welches wiederum mehrere Komponenten mit unterschiedlichen Teilfunktionen umfasst. Wie bereits erwähnt, können diese Komponenten des Vakuumgeräts jeweils insbesondere von einem Mikrocontroller gebildet werden, beispielsweise zur Steuerung eines Antriebs des Vakuumgeräts, z.B. eines Elektromotors einer Vakuumpumpe, zur Steuerung der Kommunikation des Vakuumgeräts, zur Prozesssteuerung sowie zur Datenhandhabung des Vakuumgeräts dienen. Für jeden Mikrocontroller ist zumindest ein Softwaremodul vorgesehen, das die Software umfasst, die während des Betriebs des Vakuumgeräts von dem Mikrocontroller verarbeitet wird, um die betreffende Teilfunktion auszuführen.

Dementsprechend kann gemäß einigen Ausführungsbeispielen vorgesehen sein, dass das Vakuumsystem eine Vakuumanlage ist, die als Komponenten mehrere Vakuumgeräte umfasst, von denen zumindest zwei Vakuumgeräte von einem unterschiedlichen Typ sind. Grundsätzlich ist es auch möglich, dass alle Vakuumgeräte der Vakuumanlage von einem gleichen Typ sind, wobei aber keine zwei Vakuumgeräte die gleiche Teilfunktion ausführen, insofern also in der Vakuumanlage keine Redundanz vorhanden ist.

Gemäß einigen Weiterbildungen der Erfindung kann es sich bei dem Vakuumsystem um eine Pumpanlage handeln, insbesondere um einen Pumpstand, die als Komponenten mehrere Vakuumgeräte umfasst, von denen zumindest zwei Vakuumgeräte von einem unterschiedlichen Typ sind und von denen zumindest ein Vakuumgerät eine Vakuumpumpe ist. Auch hier gilt, dass alternativ alle Vakuumgeräte von einem gleichen Typ sein können, dabei aber unterschiedliche Teilfunktionen ausführen, so dass insofern die Pumpanlage keine Redundanz aufweist.

Gemäß weiteren Ausführungsbeispielen kann das Vakuumsystem ein Pumpstand sein, der als Komponenten mehrere Vakuumpumpen umfasst, von denen zumindest zwei Vakuumpumpen von einem unterschiedlichen Typ sind. Beispielsweise kann der Pumpstand eine Turbomolekularvakuumpumpe als Hauptpumpe und eine Drehschieberpumpe als Vorpumpe für die Turbomolekularvakuumpumpe umfassen. Grundsätzlich können auch bei einem das Vakuumsystem bildenden Pumpstand, der als Komponenten mehrere Vakuumpumpen umfasst, diese Vakuumpumpen von einem gleichen Typ sein, wenn diese unterschiedliche Teilfunktionen innerhalb des Pumpstands ausführen und insofern keine Redundanz vorhanden ist.

In anderen Ausführungsbeispielen kann vorgesehen sein, dass das Vakuumsystem ein Vakuumgerät ist, beispielsweise eine Vakuumpumpe, ein Vakuummessgerät oder ein Vakuumventil, das als Komponenten mehrere Mikrocontroller umfasst. Dabei ist jeder Mikrocontroller für eine Teilfunktion des Vakuumgeräts zuständig. Wie bereits an anderer Stelle erwähnt, kann es sich bei diesen Teilfunktionen um eine Prozesssteuerung, eine Antriebssteuerung, eine Kommunikation und eine Datenhandhabung handeln.

Wie bereits erwähnt, betrifft die Erfindung auch ein Verfahren zum Betreiben eines Vakuumsystems mit mehreren Komponenten, die jeweils eine Teilfunktion von mehreren unterschiedlichen Teilfunktionen des Vakuumsystems ausführen und die hierzu jeweils zumindest ein Softwaremodul aufweisen, das eine Komponenten-Software umfasst, die während des Betriebs des Vakuumsystems von der Komponente verarbeitet wird, um die Teilfunktion dieser Komponente auszuführen. Dabei werden während des Betriebs des Vakuumsystems die Softwaremodule komponentenweise dadurch aktualisiert, dass an zumindest einer Komponente deren Komponenten-Software aktualisiert wird und währenddessen diese Komponente ihre Teilfunktion nicht ausführt, und dass während der Aktualisierung der Komponenten-Software der zumindest einen Komponente die oder jede andere Komponente ihre Teilfunktion weiterhin ausführt, so dass während der Aktualisierung der Komponenten-Software einer jeweiligen Komponente das Vakuumsystem ohne die Teilfunktion dieser Komponente weiterhin betrieben wird.

In einem jeweiligen Vakuumsystem erfolgt die Ausführung des Verfahrens insbesondere mittels einer Steuereinrichtung des Vakuumsystems, wie dies vorstehend im Zusammenhang mit dem Vakuumsystem erläutert worden ist. Das, wozu die Steuereinrichtung in den vorstehend erläuterten Weiterbildungen des Vakuumsystems jeweils ausgebildet ist, bildet somit entsprechende Weiterbildungen des erfindungsgemäßen Verfahrens.

Bei dem Verfahren kann also vorgesehen sein, dass die Softwaremodule von zumindest zwei Komponenten nacheinander aktualisiert werden.

Des Weiteren kann bei dem Verfahren vorgesehen sein, dass das Softwaremodul einer jeweiligen Komponente über eine andere Komponente aktualisiert wird.

Ferner kann gemäß einigen Ausführungsbeispielen vorgesehen sein, dass das Softwaremodul einer jeweiligen Komponente dadurch aktualisiert wird, dass die neue Komponenten-Software dieser jeweiligen Komponente an eine andere Komponente, insbesondere an das Softwaremodul dieser anderen Komponente, übertragen wird und von dort an das Softwaremodul der jeweiligen Komponente übertragen wird, um das Softwaremodul dieser jeweiligen Komponente zu aktualisieren.

Des Weiteren kann gemäß einigen Ausführungsformen des Verfahrens vorgesehen sein, dass das Softwaremodul einer jeweiligen Komponente dadurch aktualisiert wird, dass die neue Komponenten-Software dieser jeweiligen Komponente zunächst bei der vorherigen Aktualisierung einer anderen Komponente zusammen mit der neuen Komponenten-Software dieser anderen Komponente an diese andere Komponente, insbesondere an das Softwaremodul dieser anderen Komponente, übertragen und dort zwischengespeichert wird, und dass zu einem späteren Zeitpunkt die zwischengespeicherte neue Komponenten-Software an das Softwaremodul der jeweiligen Komponente übertragen wird, um das Softwaremodul dieser jeweiligen Komponente zu aktualisieren.

Die Erfindung wird im Folgenden beispielhaft unter Bezugnahme auf die Zeichnung beschrieben. Es zeigen:
- Fig. 1: schematisch ein Vakuumsystem gemäß der Erfindung, das mehrere Komponenten aufweist, die jeweils mehrere Softwaremodule aufweisen,
- Fig. 2: Darstellungen eines Vakuumsystems gemäß Fig. 1 zur Erläuterung einer Software-Aktualisierung zunächst an der einen Komponente und dann an der anderen Komponente,
- Fig. 3 und 4: andere Möglichkeiten zur Software-Aktualisierung einer der beiden Komponenten eines Vakuumsystems gemäß Fig. 1, und
- Fig. 5 und 6: zwei unterschiedliche Ausführungsformen eines erfindungsgemäßen Vakuumsystems mit mehreren Komponenten.

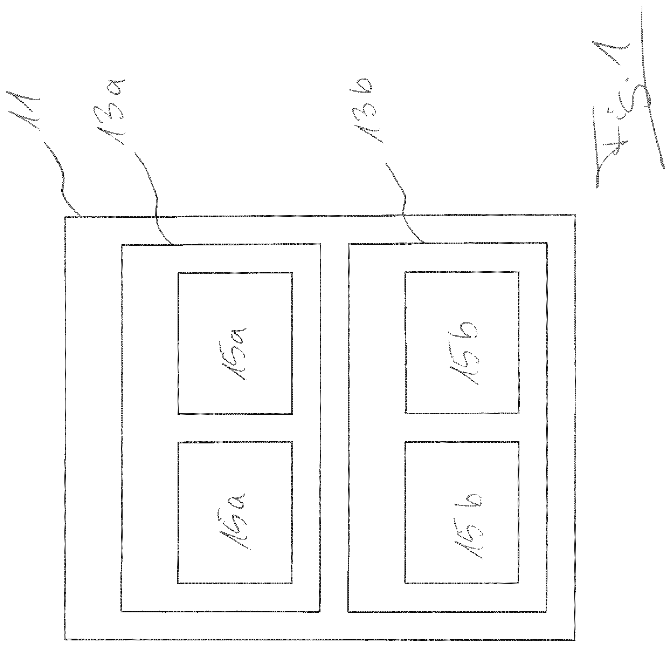

Fig. 1 zeigt schematisch ein Vakuumsystem 11, das eine erste Komponente 13a und eine zweite Komponente 13b aufweist, wobei die erste Komponente 13a zwei Softwaremodule 15a und die zweite Komponente 13b zwei Softwaremodule 15b aufweist.

Wie im Einleitungsteil erläutert, kann die Erfindung an einem solchen Vakuumsystem 11 in unterschiedlichen realen Skalierungen zur Anwendung kommen. Bei dem Vakuumsystem 11 kann es sich z.B. um eine vergleichsweise komplexe Vakuumanwendung wie beispielsweise eine Beschichtungsanlage handeln. Alternativ kann das Vakuumsystem 11 eine vergleichsweise einfache Vakuumanwendung bilden, wie beispielsweise einen Pumpstand. Gemäß einer weiteren realen Skalierung kann das Vakuumsystem 11 ein Vakuumgerät wie beispielsweise eine Vakuumpumpe sein.

Anders als in Fig. 1 dargestellt, kann das Vakuumsystem 11 mehr als zwei Komponenten 13a, 13b aufweisen. Des Weiteren kann abweichend von der Darstellung in Fig. 1 vorgesehen sein, dass eine oder mehrere Komponenten 13a, 13b mehr als zwei Softwaremodule 15a, 15b oder auch nur ein Softwaremodul 15a, 15b aufweisen.

Dass in dem dargestellten Beispiel die beiden Komponenten 13a, 13b jeweils zwei Softwaremodule 15a bzw. 15b aufweisen, bedeutet nicht, dass insofern die Komponenten 13a, 13b redundant aufgebaut sind. Jede Komponente 13a, 13b führt während des Betriebs des Vakuumsystems ihre eigene Teilfunktion des Vakuumsystems aus, wobei sich die Teilfunktionen der Komponenten 13a, 13b voneinander unterscheiden. Diejenige Komponenten-Software, die während des Betriebs des Vakuumsystems 11 von der jeweiligen Komponente 13a bzw. 13b verarbeitet wird, um die Teilfunktion der betreffenden Komponente 13a bzw. 13b auszuführen, ist lediglich in einem der Softwaremodule 15a bzw. 15b vorgesehen und wird während des Betriebs des Vakuumsystems 11 dort verarbeitet. Auf das jeweils andere Softwaremodul 15a, 15b könnte also insofern verzichtet werden. Das jeweilige weitere Softwaremodul 15a bzw. 15b kann aber zum Beispiel dazu verwendet werden, andere ausführbare Software zu enthalten, auf die es im Zusammenhang mit der Erfindung nicht ankommt. Alternativ kann das jeweilige weitere Softwaremodul 15a bzw. 15b beispielsweise dazu dienen, nach einer Aktualisierung der Komponenten-Software, wenn also neue Komponenten-Software an das eine Softwaremodul 15a bzw. 15b übertragen worden ist, die alte Komponenten-Software zu speichern, damit diese beispielsweise als Sicherung bzw. Rückfalllösung zur Verfügung steht, wenn dies in bestimmten Situationen erforderlich ist, beispielsweise wenn ein Fehler im Zusammenhang mit der neuen Komponenten-Software auftritt. Das jeweilige weitere Softwaremodul 15a bzw. 15b kann folglich für eine solche Backup-Funktion vorgesehen sein. Eine Redundanz ist mit dem Vorsehen der jeweils zwei Softwaremodule 15a bzw. 15b für die Komponenten 13a bzw. 13b nicht verbunden.

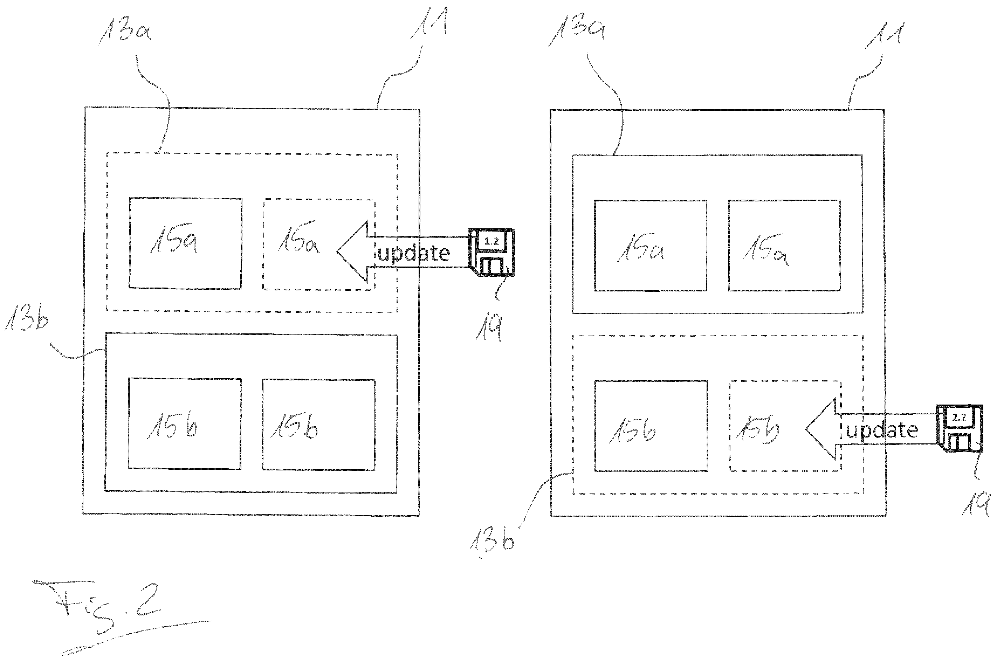

Fig. 2 zeigt eine Möglichkeit zur Aktualisierung der Komponenten-Software für die beiden Komponenten 13a, 13b. Die neue Komponenten-Software 1.2 (für die Komponente 13a) bzw. 2.2 (für die Komponente 13b) wird dem Vakuumsystem 11 jeweils von außen zugeführt, hier veranschaulicht durch einen die jeweilige neue Komponenten-Software 1.2 bzw. 2.2 enthaltenden Datenträger 19, der jeweils mit einem hierfür vorgesehenen Anschluss des Vakuumsystems 11 verbunden wird. In dem hier dargestellten Beispiel ist für jede der beiden Komponenten 13a, 13b ein solcher Anschluss vorgesehen. Wenn beispielsweise das Vakuumsystem 11 eine Vakuumpumpe ist, dann kann z.B. an der Außenseite des Gehäuses der Vakuumpumpe 11 für jede der beiden Komponenten 13a, 13b, bei der es sich beispielsweise jeweils um einen Mikrocontroller handeln kann, ein separater Steckanschluss vorgesehen.

Wenn gemäß der linken Darstellung in Fig. 2 die erste Komponente 13a aktualisiert, also die neue Komponenten-Software 1.2 in das entsprechende Softwaremodul 15a eingespielt wird, ist dieses Softwaremodul 15a nicht aktiv, was durch die gestrichelten Linien angedeutet ist. Da dieses Softwaremodul 15a für die jeweilige Teilfunktion der Komponente 13a zuständig ist, ist folglich diese Komponente 13a nicht aktiv, was wiederum durch die gestrichelten Linien angedeutet ist. Die Teilfunktion dieser Komponente 13a steht also vorübergehend während der Updates für den Betrieb des Vakuumsystems 11 nicht zur Verfügung. Gleichwohl wird das Vakuumsystem 11 trotz der vorübergehenden Nichtfunktion der Komponente 13a weiterhin betrieben, da die andere Komponente 13b, die von der Software-Aktualisierung der Komponente 13a nicht betroffen ist, weiterhin ihre Teilfunktion ausführen kann.

Wie weiter oben bereits erwähnt kann - zusätzlich oder alternativ - eine drahtgebundene Verbindung zur Aktualisierung der Komponenten-Software vorgesehen sein. Zur Herstellung solch einer Verbindung kann das Vakuumsystem 11 zumindest eine serielle Schnittstelle (z.B. auf Basis RS485 oder CAN), zumindest einen Feldbus (z.B. Profibus, Modbus) und/oder zumindest eine Anbindung an Industrial Ethernet (z.B. EtherCAT, Profinet) und/oder zumindest eine andere herkömmliche Schnittstelle aufweisen. Zur Übermittlung der entsprechenden Daten können TCP/IP-basierende Protokolle oder andere Protokolle oder Standards der Informationstechnologie (z.B. FTP) herangezogen werden.

Des Weiteren kann alternativ oder zusätzlich eine drahtlose Verbindung zur Aktualisierung der Komponenten-Software vorgesehen sein.

Das Konzept der Erfindung beruht somit auf der Erkenntnis, dass ein Weiterbetrieb des Vakuumsystems 11 auch dann möglich ist, wenn eine oder mehrere Komponenten vorübergehend aufgrund eines Softwareupdates ihre jeweilige Teilfunktion nicht ausführen können. Das Konzept der Erfindung kann den Umstand ausnutzen, dass eine Software-Aktualisierung in den meisten Fällen lediglich einige Sekunden oder allenfalls wenige Minuten dauert. Eine Nichtfunktion einer momentan in einem Softwareupdate befindlichen Komponente kann für eine solche, im Vergleich zu der Zeitdauer einer typischen Vakuumanwendung vergleichsweise kurzen Zeitspanne überbrückt werden, und zwar durch den Weiterbetrieb der andere(n) Komponente(n).

Beispielsweise kann eine Antriebssteuerung für den Antriebsmotor eines Rotors einer Vakuumpumpe für eine solche kurze Zeitspanne vorübergehend inaktiv sein, da das das rotierende System einer Vakuumpumpe wie z.B. einer Turbomolekularvakuumpumpe, das mit einer hohen Drehzahl von mehreren 1.000 bis mehreren 10.000 Umdrehungen pro Minute rotiert, aufgrund seiner Trägheit auch bei inaktiver Antriebssteuerung weiterrotiert und allenfalls in einem für die Vakuumanwendung unkritischem Maß an Drehzahl verliert. Dies gilt zumindest dann, wenn die inaktive Phase nicht gerade zu Beginn eines Evakuierungsvorgangs stattfindet, sondern bereits ein jeweils gewünschter Enddruck erreicht ist, der lediglich noch mittels der Vakuumpumpe aufrechterhalten werden muss. Eine Software-Aktualisierung an der Antriebssteuerung (beispielsweise Komponente 13a) beeinträchtigt den Weiterbetrieb der Vakuumpumpe (Vakuumsystem 11) und damit der diese Vakuumpumpe umfassenden Vakuumanwendung nicht, da die übrigen Teilfunktionen, die von den anderen Mikrocontrollern (als Beispiel Komponente 13b) ausgeführt werden, den Weiterbetrieb der Turbomolekularvakuumpumpe gewährleisten.

Ein Abschalten der Vakuumpumpe für ein Update, was für den Anwender zu einer inakzeptablen Unterbrechung der betreffenden Vakuumanwendung führen würde, da die Vakuumpumpe nach dem Update erst wieder hochgefahren werden müsste, ist bei dem erfindungsgemäßen Konzept nicht notwendig.

Sobald die Aktualisierung des Softwaremoduls 15a der Komponente 13a abgeschlossen ist, kann diese Komponente 13a ihre Teilfunktion wieder aufnehmen. Unmittelbar im Anschluss an die Aktualisierung der Komponente 13a oder zu einem grundsätzlich beliebigen späteren Zeitpunkt kann die Aktualisierung der Komponenten-Software der weiteren Komponente 13b erfolgen, wie dies in der rechten Darstellung der Fig. 2 gezeigt ist. Die neue Komponenten-Software 2.2 wird wiederum von extern über einen Datenträger 19 zugeführt, der in den entsprechenden Anschluss z.B. an der Außenseite des Gehäuses einer das Vakuumsystem 11 bildenden Vakuumpumpe eingesteckt wird.

Während dieser Aktualisierung sind das betreffende Softwaremodul 15b und somit die Komponente 13b inaktiv, wie dies wiederum durch die gestrichelten Linien angedeutet ist. Die das Vakuumsystem 11 bildende Vakuumpumpe wird gleichwohl weiterbetrieben, da die betreffende Teilfunktion dieser Komponente 13b, beispielsweise die Kommunikation mit einer zentralen Steuereinheit eines die Vakuumpumpe 11 beinhaltenden Pumpstands, vorübergehend inaktiv sein kann, ohne den Betrieb der Vakuumpumpe 11 selbst oder den Betrieb des übergeordneten Pumpstands zu gefährden.

Innerhalb der jeweiligen Vakuumanwendung, beispielsweise in der erwähnten Steuereinheit des übergeordneten Pumpstands, können Vorkehrungen getroffen sein, die eine bevorstehende bzw. stattfindende Software-Aktualisierung an der die Teilfunktion "Kommunikation" ausführenden Komponente 13b erkennen und nicht zu einer Fehlermeldung führen, obwohl aufgrund der Software-Aktualisierung die Kommunikations-Komponente 13b vorübergehend inaktiv ist.

Auf diese Weise kann eine komponentenweise Aktualisierung eines Vakuumsystems 11 erfolgen, ohne dass der Betrieb des Vakuumsystems 11 unterbrochen, beispielsweise eine das Vakuumsystem 11 bildende Vakuumpumpe abgeschaltet werden muss.

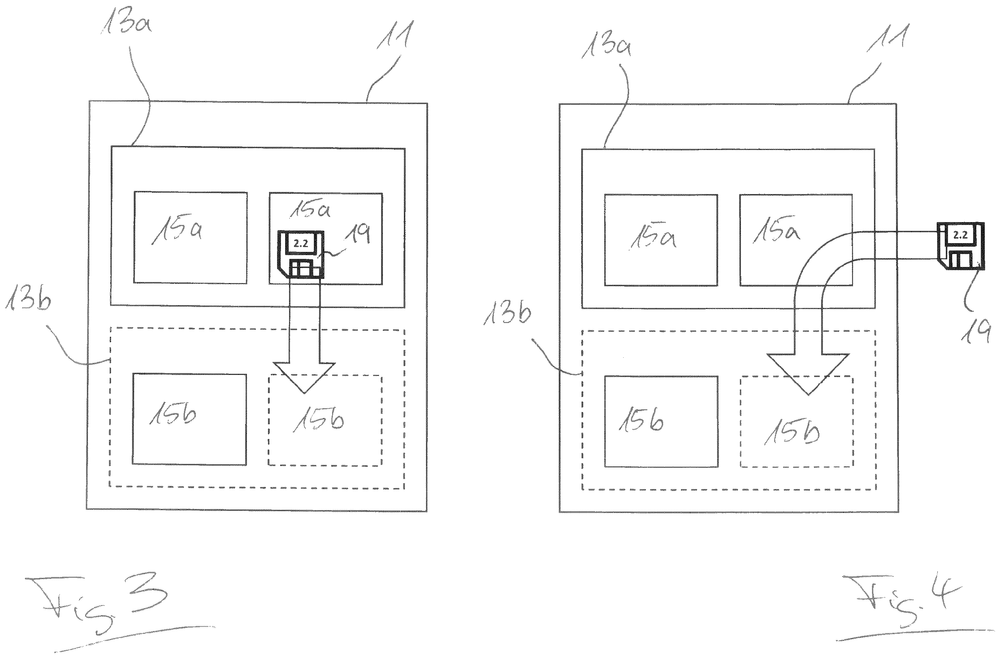

Fig. 3 zeigt schematisch ein Beispiel für eine rein interne Aktualisierung des Softwaremoduls 15b der weitere Komponente 13b des Vakuumsystems 11. Die neue Komponenten-Software 2.2 ist bereits zu einem früheren Zeitpunkt mittels eines Datenträgers 19 an das Vakuumsystem 11 übertragen worden, jedoch nicht direkt in das mit dieser neuen Komponenten-Software 2.2 zu aktualisierende Softwaremodul 15b, sondern an das Softwaremodul 15a der anderen Komponente 13a. Diese Übertragung kann im Zuge einer Aktualisierung des Softwaremoduls 15a erfolgen, indem diesem Softwaremodul 15a sowohl die neue Komponenten-Software 1.2 (vgl. Fig. 2) für das Softwaremodul 15a als auch die neue Komponenten-Software 2.2 für das Softwaremodul 15b zugeführt wird. Die neue Komponenten-Software 2.2 für das Softwaremodul 15b wird folglich im Softwaremodul 15a der Komponente 13a so lange zwischengespeichert, bis eine Aktualisierung des Softwaremoduls 15b durchgeführt werden soll oder kann, die dann - wie durch den Pfeil in Fig. 3 angedeutet - ausschließlich intern, also innerhalb des Vakuumsystems 11, erfolgt.

Dieser Weg für die neue Software einer jeweiligen Komponente 13b über eine andere Komponente 13a kann beispielsweise dann von Vorteil sein, wenn das jeweilige Vakuumsystem 11 nur einen einzigen Anschluss für die Übertragung von Software aufweist, der nur mit der anderen Komponente 13a verbunden ist.

Eine andere Möglichkeit, die für ein Softwareupdate einer jeweiligen Komponente 13b den Weg über eine der anderen Komponenten 13a geht, ist in Fig. 4 veranschaulicht.

Hier ist durch den von außen über das Softwaremodul 15a zum Softwaremodul 15b führenden Pfeil angedeutet, dass keine Zwischenspeicherung der neuen Komponenten-Software 2.2 in dem Softwaremodul 15a erfolgt, sondern das Softwaremodul 15a lediglich als Übertragungsweg zum mit dieser Komponenten-Software 2.2 zu aktualisierenden Softwaremodul 15b genutzt wird.

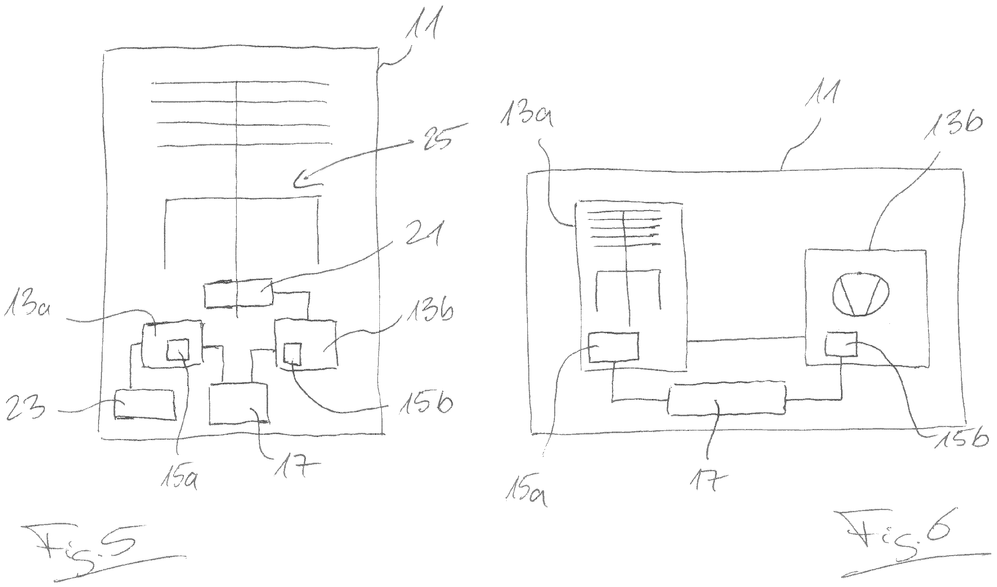

In Fig. 5 ist ein konkretes Anwendungsbeispiel schematisch veranschaulicht. Bei dem Vakuumsystem 11 handelt es sich um eine Turbomolekularvakuumpumpe mit einem rotierenden System 25, das mittels eines Antriebsmotors 21 in Rotation versetzt wird.

Die Antriebssteuerung, also die Ansteuerung des Antriebsmotors 21, erfolgt mittels eines Mikrocontrollers 13b, der ein Softwaremodul 15b umfasst, in dem Software verarbeitet wird, die für diese Teilfunktion "Antriebssteuerung" vorgesehen ist.

Des Weiteren umfasst die Turbomolekularvakuumpumpe 11 eine Kommunikationseinheit 23, die beispielsweise für eine Kommunikation mit einer übergeordneten Vakuumanlage dienen kann, in welche die Turbomolekularvakuumpumpe 11 eingebunden ist. Die Steuerung dieser Kommunikationseinheit 23 erfolgt durch einen weiteren Mikrocontroller 13a, der ein Softwaremodul 15a umfasst, an dem Software ausgeführt wird, die für diese Teilfunktion "Kommunikationssteuerung" vorgesehen ist.

Damit bilden im Sinne der Struktur des erfindungsgemäßen Konzeptes die beiden Mikrocontroller 13a, 13b Komponenten mit unterschiedlichen Teilfunktionen des Vakuumsystems "Turbomolekularvakuumpumpe 11". Mit Bezug auf die vorstehenden Ausführungen ist hier also eine Realisierung des Konzeptes der Erfindung in der Skalierung "Vakuumsystem = Vakuumgerät" realisiert.

Eine Steuereinrichtung 17 der Turbomolekularvakuumpumpe 11 ist unter anderem dazu ausgebildet, gemäß dem Konzept der Erfindung während des Betriebs der Turbomolekularvakuumpumpe 11 die Softwaremodule 15a, 15b der Mikrocontroller 13a, 13b bei Bedarf mit neuer Mikrocontroller-Software zu aktualisieren, wie dies anhand der unterschiedlichen Möglichkeiten vorstehend erläutert worden ist.

Fig. 6 zeigt ein konkretes Beispiel des erfindungsgemäßen Konzeptes in einer Skalierung "Vakuumsystem = Pumpstand". Das Vakuumsystem 11 wird hier also von einem Pumpstand gebildet, der unter anderem eine Turbomolekularvakuumpumpe 13a - beispielsweise die Turbomolekularvakuumpumpe von Fig. 5 - sowie eine weitere Vakuumpumpe 13b aufweist, die beispielsweise eine Drehschiebervakuumpumpe ist und als Vorpumpe für die Turbomolekularvakuumpumpe 13a dient.

Die beiden Vakuumpumpen 13a, 13b bilden somit Komponenten des von dem Pumpstand 11 gebildeten Vakuumsystems.

Sowohl die Turbomolekularvakuumpumpe 13a als auch die Vorpumpe 13b ist jeweils mit einem Softwaremodul 15a bzw. 15b versehen, das jeweils den Betrieb der betreffenden Vakuumpumpe 13a, 13b steuert. Dabei sind die Softwaremodule 15a bzw. 15b jeweils einem Mikrocontroller (nicht gezeigt) zugeordnet.

Eine Steuereinrichtung 17 des Pumpstands 11 ist mit den Vakuumpumpen 13a und 13b sowie deren Softwaremodulen 15a bzw. 15b verbunden, entweder über eine Verbindungsleitung oder über eine drahtlose Kommunikationsverbindung. Die Steuereinrichtung 17 ist dazu ausgebildet, eine Software-Aktualisierung an den Softwaremodulen 15a, 15b vorzusehen, wie dies vorstehend anhand der unterschiedlichen Möglichkeiten erläutert worden ist.

Die rein beispielhaft dargestellten Skalierungen gemäß den Fig. 5 und 6 können auch gleichzeitig vorgesehen sein. Damit ist gemeint, dass beispielsweise die Turbomolekularvakuumpumpe 13a, die eine der Komponenten des von dem Pumpstand 11 in Fig. 6 gebildeten Vakuumsystems bildet, selbst ein Vakuumsystem 11 gemäß der Skalierung in Fig. 5 sein kann. Die Turbomolekularvakuumpumpe 13a im Pumpstand 11 gemäß Fig. 6 kann folglich entsprechend dem Ausführungsbeispiel der Fig. 5 ausgebildet sein und mehrere Komponenten in Form von Mikrocontrollern 13a, 13b aufweisen, die jeweils eine der vorstehend anhand der Fig. 5 erläuterten Teilfunktionen übernehmen.

Während also eine Software-Aktualisierung im Pumpstand 11 gemäß Fig. 6 im Sinne der Erfindung komponentenweise, hier also gewissermaßen vakuumpumpenweise erfolgen kann, kann eine Software-Aktualisierung an der Turbomolekularvakuumpumpe 13a wiederum im Sinne der Erfindung komponentenweise, hier also mikrocontrollerweise, entsprechend dem Ausführungsbeispiel der Fig. 5 erfolgen.

Im Sinne der Skalierung "Vakuumsystem = Pumpstand" in dem Beispiel der Fig. 6 kann eine Software-Aktualisierung der Turbomolekularvakuumpumpe 13a als Ganzes erfolgen, so dass in diesem Pumpstand 11 die

Turbomolekularvakuumpumpe 13a abgeschaltet werden kann, ohne dass der gesamte Pumpstand 11
vorübergehend stillgelegt werden muss. Die Vorpumpe 13b kann weiterbetrieben werden. Sobald die Aktualisierung der Turbomolekularvakuumpumpe 13a abgeschlossen ist, braucht folglich nur die Turbomolekularvakuumpumpe 13a wieder gestartet zu werden, nicht aber der gesamte Pumpstand 11.

In einer bevorzugten Ausgestaltung wird bei einem Pumpstand gemäß Fig. 6 die Turbomolekularvakuumpumpe 13a selbst komponentenweise, also insbesondere mikrocontrollerweise, softwareaktualisiert, d.h. die Turbomolekularvakuumpumpe 13a braucht nicht vollständig abgeschaltet zu werden. Für eine Software-Aktualisierung am Softwaremodul 15b der Vorpumpe 13b kann diese entweder vollständig abgeschaltet oder ebenfalls komponentenweise analog zu dem in Fig. 5 anhand der Turbomolekularvakuumpumpe 11 beschriebenen Beispiel aktualisiert werden.

Wenn für die Turbomolekularvakuumpumpe 11 gemäß Fig. 5 eine Software-Aktualisierung ansteht, kann dies - wie an anderer Stelle bereits erläutert - ohne nachteilige Einschränkung des Betriebs der Turbomolekularvakuumpumpe 11 erfolgen, indem der eine Mikrocontroller 13a bzw. 13b weiterbetrieben wird, während der andere Mikrocontroller 13b bzw. 13a mit neuer Software versehen wird. Insbesondere rotiert das rotierende System 25 der Turbomolekularvakuumpumpe 11 aufgrund seiner Trägheit weiter, auch wenn vorübergehend der Antriebsmotor 21 nicht angesteuert wird, wenn das Softwaremodul 15b des hierfür zuständigen Mikrocontrollers 13b mit aktueller Software versehen wird.

### Bezugszeichenliste

- 11: Vakuumsystem
- 13a: Komponente
- 13b: Komponente
- 15a: Softwaremodul
- 15b: Softwaremodul
- 17: Steuereinrichtung
- 19: Datenträger
- 21: Antriebsmotor
- 23: Kommunikationseinheit
- 25: rotierendes System

## Patentansprüche

1. Vakuumsystem (11) mit mehreren Komponenten (13a, 13b), die jeweils eine Teilfunktion von mehreren unterschiedlichen Teilfunktionen des Vakuumsystems (11) ausführen und die hierzu jeweils zumindest ein Softwaremodul (15a, 15b) aufweisen, das eine Komponenten-Software umfasst, die während des Betriebs des Vakuumsystems (11) von der Komponente (13a, 13b) verarbeitet wird, um die Teilfunktion dieser Komponente (13a, 13b) auszuführen,
wobei das Vakuumsystem (11) eine Steuereinrichtung (17) umfasst, die dazu ausgebildet ist, während des Betriebs des Vakuumsystems (11) die Softwaremodule (15a, 15b) komponentenweise dadurch zu aktualisieren, dass an zumindest einer Komponente (13a) deren Komponenten-Software aktualisiert wird und währenddessen diese Komponente (13a) ihre Teilfunktion nicht ausführt, und
dass während der Aktualisierung der Komponenten-Software der zumindest einen Komponente (13a) die oder jede andere Komponente (13b) ihre Teilfunktion weiterhin ausführt,
so dass während der Aktualisierung der Komponenten-Software einer jeweiligen Komponente (13a) das Vakuumsystem (11) ohne die Teilfunktion dieser Komponente (13a) weiterhin betrieben wird.

2. Vakuumsystem nach Anspruch 1,
wobei die Steuereinrichtung (17) dazu ausgebildet ist, die Softwaremodule (15a, 15b) von zumindest zwei Komponenten (13a, 13b) nacheinander zu aktualisieren.

3. Vakuumsystem nach Anspruch 1 oder 2,
wobei die Steuereinrichtung (17) dazu ausgebildet ist, das Softwaremodul (15b) einer jeweiligen Komponente (13b) über eine andere Komponente (13a) zu aktualisieren.

4. Vakuumsystem nach einem der vorhergehenden Ansprüche,
wobei die Steuereinrichtung (17) dazu ausgebildet ist, das Softwaremodul einer jeweiligen Komponente (13b) dadurch zu aktualisieren, dass die neue Komponenten-Software dieser jeweiligen Komponente (13b) an eine andere Komponente (13a), insbesondere an das Softwaremodul (15a) dieser anderen Komponente (13a), übertragen wird und von dort an das Softwaremodul (15b) der jeweiligen Komponente (13b) übertragen wird, um das Softwaremodul (15b) dieser jeweiligen Komponente (13b) zu aktualisieren.

5. Vakuumsystem nach einem der vorhergehenden Ansprüche,
wobei die Steuereinrichtung (17) dazu ausgebildet ist, das Softwaremodul (15b) einer jeweiligen Komponente (13b) dadurch zu aktualisieren, dass die neue Komponenten-Software dieser jeweiligen Komponente (13b) zunächst bei der vorherigen Aktualisierung einer anderen Komponente (13a) zusammen mit der neuen Komponenten-Software dieser anderen Komponente (13a) an diese andere Komponente (13a), insbesondere an das Softwaremodul (15a) dieser anderen Komponente (13a), übertragen und dort zwischengespeichert wird, und
dass zu einem späteren Zeitpunkt die zwischengespeicherte neue Komponenten-Software an das Softwaremodul (15b) der jeweiligen Komponente (15a) übertragen wird, um das Softwaremodul (15b) dieser jeweiligen Komponente (13b) zu aktualisieren.

6. Vakuumsystem nach einem der vorhergehenden Ansprüche,
wobei die Steuereinrichtung (17) dazu ausgebildet ist, vor, während oder nach der Aktualisierung einer jeweiligen Komponenten-Software die vor der Aktualisierung von der Komponente (13a, 13b) verarbeitete alte Komponenten-Software zu löschen oder, insbesondere als Sicherung, Alternative oder Rückfalllösung, zu speichern, insbesondere in dem Softwaremodul (15a, 15b) der jeweiligen Komponente (13a, 13b).

7. Vakuumsystem nach einem der vorhergehenden Ansprüche,
wobei das Vakuumsystem (11) eine Vakuumanlage ist, die als Komponenten (13a, 13b) mehrere Vakuumgeräte umfasst, von denen zumindest zwei Vakuumgeräte von einem gleichen Typ oder unterschiedlichen Typ sind.

8. Vakuumsystem nach einem der vorhergehenden Ansprüche,
wobei das Vakuumsystem (11) eine Pumpanlage, insbesondere ein Pumpstand, ist, die als Komponenten (13a, 13b) mehrere Vakuumgeräte umfasst, von denen zumindest zwei Vakuumgeräte von einem gleichen oder unterschiedlichen Typ sind und von denen zumindest ein Vakuumgerät eine Vakuumpumpe ist.

9. Vakuumsystem nach einem der vorhergehenden Ansprüche,
wobei das Vakuumsystem (11) ein Pumpstand ist, der als Komponenten (13a, 13b) mehrere Vakuumpumpen umfasst, von denen zumindest zwei Vakuumpumpen von einem gleichen oder unterschiedlichen Typ sind.

10. Vakuumsystem nach einem der Ansprüche 1 bis 6,
wobei das Vakuumsystem (11) ein Vakuumgerät ist, insbesondere eine Vakuumpumpe, ein Vakuummessgerät oder ein Vakuumventil, das als Komponenten (13a, 13b) mehrere Mikrocontroller umfasst.

11. Verfahren zum Betreiben eines Vakuumsystem (11) mit mehreren Komponenten (13a, 13b), die jeweils eine Teilfunktion von mehreren unterschiedlichen Teilfunktionen des Vakuumsystems (11) ausführen und die hierzu jeweils zumindest ein Softwaremodul (15a, 15b) aufweisen, das eine Komponenten-Software umfasst, die während des Betriebs des Vakuumsystems (11) von der Komponente (13a, 13b) verarbeitet wird, um die Teilfunktion dieser Komponente (13a, 13b) auszuführen,
wobei während des Betriebs des Vakuumsystems (11) die Softwaremodule (15a, 15b) komponentenweise dadurch aktualisiert werden,
dass an zumindest einer Komponente (13a) deren Komponenten-Software aktualisiert wird und währenddessen diese Komponente (13a) ihre Teilfunktion nicht ausführt, und
dass während der Aktualisierung der Komponenten-Software der zumindest einen Komponente (13a) die oder jede andere Komponente (13b) ihre Teilfunktion weiterhin ausführt,
so dass während der Aktualisierung der Komponenten-Software einer jeweiligen Komponente (13a) das Vakuumsystem (11) ohne die Teilfunktion dieser Komponente (13a) weiterhin betrieben wird.

12. Verfahren nach Anspruch 11,
wobei die Softwaremodule (15a, 15b) von zumindest zwei Komponenten (13a, 13b) nacheinander aktualisiert werden.

13. Verfahren nach Anspruch 11 oder 12,
wobei das Softwaremodul (15b) einer jeweiligen Komponente (13b) über eine andere Komponente (13a) aktualisiert wird.

14. Verfahren nach einem der Ansprüche 11 bis 13,
wobei das Softwaremodul (15b) einer jeweiligen Komponente (13b) dadurch aktualisiert wird, dass die neue Komponenten-Software dieser jeweiligen Komponente (13b) an eine andere Komponente (13a), insbesondere an das Softwaremodul (15a) dieser anderen Komponente (13a), übertragen wird und von dort an das Softwaremodul (15b) der jeweiligen Komponente (13b) übertragen wird, um das Softwaremodul (15b) dieser jeweiligen Komponente (13b) zu aktualisieren.

15. Verfahren nach einem der Ansprüche 11 bis 14,
wobei das Softwaremodul (15b) einer jeweiligen Komponente (13b) dadurch aktualisiert wird,
dass die neue Komponenten-Software dieser jeweiligen Komponente (13b) zunächst bei der vorherigen Aktualisierung einer anderen Komponente (13a) zusammen mit der neuen Komponenten-Software dieser anderen Komponente (13a) an diese andere Komponente (13a), insbesondere an das Softwaremodul (15a) dieser anderen Komponente (13a), übertragen und dort zwischengespeichert wird, und
dass zu einem späteren Zeitpunkt die zwischengespeicherte neue Komponenten-Software an das Softwaremodul (15b) der jeweiligen Komponente (13b) übertragen wird, um das Softwaremodul (15b) dieser jeweiligen Komponente (13b) zu aktualisieren.
